# EUROPÄISCHE PATENTSCHRIFT

(11) **EP 1 721 073 B1**
(45) Veröffentlichungstag und Bekanntmachung des Hinweises auf die Patenterteilung: **24.11.2010**
(21) Anmeldenummer: 04804157.8
(22) Anmeldetag: 22.12.2004
(51) Int. Cl.: F02M 23/00, F02M 3/09, F02M 3/12, F02D 35/00, F02D 31/00

(54) **ANSAUGEINRICHTUNG F R EINEN VERBRENNUNGSMOTOR**
INLET DEVICE FOR AN INTERNAL COMBUSTION ENGINE
SYSTEME D'ADMISSION POUR MOTEUR A COMBUSTION INTERNE

(30) Priorität: 16.01.2004 DE 102004002340
(43) Veröffentlichungstag der Anmeldung: 15.11.2006
(73) Patentinhaber: Bayerische Motoren Werke Aktiengesellschaft, 80809 München (DE)
(72) Erfinder: SPICKERMANN, Martin, 65462 Ginsheim-Gustanvsbur (DE); RÖHRIG, Berndt, 82178 Puchheim (DE); MÜLLER, Daniel, 82065 Baierbrunn (DE)
(86) Internationale Anmeldenummer: PCT/EP2004/014561
(87) Internationale Veröffentlichungsnummer: WO 2005/068817

(56) Entgegenhaltungen:
- EP-A- 0 094 002
- EP-A- 0 389 010
- DE-A1- 19 636 806
- US-A- 5 649 512
- US-B1- 6 481 411

## Beschreibung

Die vorliegende Erfindung betrifft eine Ansaugeinrichtung für einen Verbrennungsmotor, insbesondere für einen Verbrennungsmotor für Motorräder, gemäß dem Oberbegriff des Patentanspruches 1.

Eine derartige Ansaugeinrichtung ist aus der US 5 649 512 bekannt. Zum technischen Hintergrund der Erfindung zählt ferner ein in der DE 196 36 806 A1 beschriebenen Luftansaugrohr für Brennkraftmaschinen. Mehrzylinderverbrennungsmotoren für Motorräder weisen üblicherweise ein Ansaugsystem mit einem "zentralen Ansaugkasten" auf, der häufig als "Airbox" bezeichnet wird. Der Ansaugkasten ist über Luft- bzw. Gemischkanäle mit den einzelnen Zylindern des Verbrennungsmotors verbunden. In den einzelnen Luft- bzw. Gemischkanälen ist für jeden Zylinder eine Drosselklappe angeordnet, welche im normalen Fahrbetrieb die Luft- bzw. Gemischzufuhr zu dem jeweiligen Zylinder steuert. Im Leerlaufbetrieb benötigt ein Verbrennungsmotor nur relativ wenig Luft und reagiert sehr "feinfühlig" auf geringste Änderungen des zugeführten Luftvolumenstroms. Eine Regelung der Leerlaufdrehzahl auf einen vorgegebenen Sollwert setzt also eine sehr genaue Regelung des den einzelnen Zylindern zugeführten Luftvolumenstroms voraus. Für einen gleichmäßigen Lauf des Motors ist es erforderlich, dass den einzelnen Zylindern jeweils möglichst ein gleich großer Luftvolumenstrom zugeführt wird.

Aufgabe der Erfindung ist es, eine Ansaugeinrichtung für einen mehrzylindrigen Verbrennungsmotor zu schaffen, die im Leerlaufbetrieb einen weichen Lauf des Verbrennungsmotors ermöglicht und die gleichzeitig eine möglichst genaue Regelung der Leerlaufdrehzahl ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einer Ansaugeinrichtung mit einem zentralen "Ansaugkasten aus, der auch als Airbox bezeichnet werden kann. Die Airbox weist eine Luftansaugöffnung oder mehrere Luftansaugöffnungen auf und für jeden Zylinder des Verbrennungsmotors eine Ausgangsöffnung. Die Ausgangsöffnungen sind jeweils über einen Luft- bzw. Gemischkanal, in dem jeweils eine Drosselklappe angeordnet ist, mit dem jeweiligen Zylinder des Verbrennungsmotors verbunden. Im Normalbetrieb wird die Motordrehzahl bzw. die Motorleistung primär durch die Stellung der Drosselklappen geregelt.

Zur Regelung der Motordrehzahl im Leerlaufbetrieb ist ein "Luftverteiler element" vorgesehen, über das die einzelnen Zylinder unter Umgehung der Drosselklappen mit Luft versorgt werden. Das "Luftverteilerelement° weist ein Gehäuse auf, in dem eine Kolben-/Zylinderanordnung vorgesehen ist. Der Kolben der Kolben-/Zylinderanordnung kann beispielsweise durch einen von einer Elektronik angesteuerten Elektromotor axial verschoben werden.

Vom Ansaugkasten wird dem Zylinder des Verteilerelements Luft über einen Lufteingang zugeführt. In der Mantelfläche des Zylinders des Verteilerelements sind mehrere Luftausgangsöffnungen vorgesehen. Die Luftausgangsöffnungen sind in Umfangsrichtung des Zylinders des Verteilerelements voneinander beabstandet angeordnet. Von jeder Luftausgangsöffnung des Verteilerelements führt jeweils eine Leitung zu einem der Gemischkanäle. Die Leitung ist im Bereich zwischen der jeweiligen Drosselklappe und dem jeweiligen Zylinder an den Gemischkanal angeschlossen. Über Stellung des Kolbens des Verteilerelements können die momentanen Durchflussquerschnitte, d. h. die "effektiven Strömungsquerschnitte" der Luftausgänge bzw. der mit den Gemischkanälen verbundenen Leitungen des Verteiteretements verändert werden. Durch die Kolbenstellung kann also der den Zylindern zugeführte Luftvolumenstrom und somit die Drehzahl des Verbrennungsmotors im Leerlaufbetrieb geregelt werden.

Wie bereits angedeutet, zielt die Erfindung auf eine möglichst feinfühlige Regelung der Leerlaufdrehzahl ab. Eine gute Regelbarkeit des "Leerlaufluftvolumenstroms" wird gemäß der Erfindung durch eine verbesserte Gestaltung der Luftausgangsöffnungen des Verteilerelementes erreicht. Ganz allgemein gesprochen sind die Luftausgangsöffnungen so gestaltet, dass bei einer Verschiebung des Kolbens die "Änderung des effektiven Strömungsquerschnitts" eine Funktion der momentanen Kolbenstellung ist. Konstruktiv wird dies dadurch erreicht, dass sich die in einer Umfangsrichtung des Kolbens gemessene Breite einer jeden der Luftausgangsöffnungen in Verschieberichtung des Kolbens ändert.

Vorzugsweise nimmt die in Umfangsrichtung des Kolbens des Verteilerelements gemessene Breite einer jeden der Luftausgangsöffnungen von einer Kolbenstellung aus betrachtet, in welcher die Luftausgangsöffnu ngen ganz geöffnet sind, zu einer Kolbenstellung, in der die Luftausgangsöffnungen ganz durch den Kolben verschlossen sind, zu.

Die Luftausgangsöffnungen können "dreieckförmig" gestaltet sein. Dreieckförmig bedeutet nicht nofinrendigerweise, dass die Luftausgangsöffnungen die Form eines euklidischen Dreiecks mit geraden Kanten und "scharfen Spitzen" haben müssen. Vielmehr können die Kanten gekrümmt und die "Ecken" abgerundet sein.

Vorzugsweise weisen die Luftausgangsöffnungen einen Querschnitt mit zwei konkaven Seiten auf. Die beiden konkaven Seiten laufen "zungenartig" zusammen. In dem zungenartigen Endbereich der Luftausgangsöffnungen weisen die Luftausgangsöffnungen eine relativ geringe Breite auf. Eine Verschiebung des Kolbens in diesen Bereich bewirkt nur eine relativ geringe Änderung des effektiven Strömungsquerschnitts der Luftausgangsöffnungen und ermöglicht somit eine sehr feinfühlige Drehzahlregelung.

Nach einer Weiterbildung der Erfindung ist ein Kraftstofftank, aus dem der Verbrennungsmotor mit Kraftstoff versorgt wird, über eine Entlüftungsleitung mit dem Zylinder des Verteilerelements verbunden. Der im Kraftstofftank verdampfende Kraftstoff wird dem Zylinder des Verteilerelements zugeführt und von dort aus gleichmäßig auf die einzelnen Zylinder des Verbrennungsmotors verteilt. Somit wird vermieden, dass Kraftstoff aus dem Kraftstofftank in die Atmosphäre entweicht.

Im folgenden wird die Erfindung anhand von Ausführungsbeispielen im Zusammenhang mit der Zeichnung näher erläutert. Es zeigen:
- Figur 1: eine schematische Darstellung einer Ansaugeinrichtung für einen Verbrennungsmotor;
- Figur 2: eine Luftausgangsöffnung eines Verteilerelements gemäß dem Stand der Technik;
- Figur 3 - 5: Luftausgangsöffnungen gemäß der Erfindung;
- Figur 6: einen Querschnitt durch ein Verteilergehäuse;
- Figur 7: einen Querschnitt entlang der Linie A-A der Figur 6;
- Figur 8: einen Querschnitt durch das Verteilergehäuse entlang der Linie C-C der Figur 7;
- Figur 9: einen Querschnitt durch einen Zylinder des Verbrennungs- motors und durch das Verteilerelement entlang der Linie B-B der Figur 7.

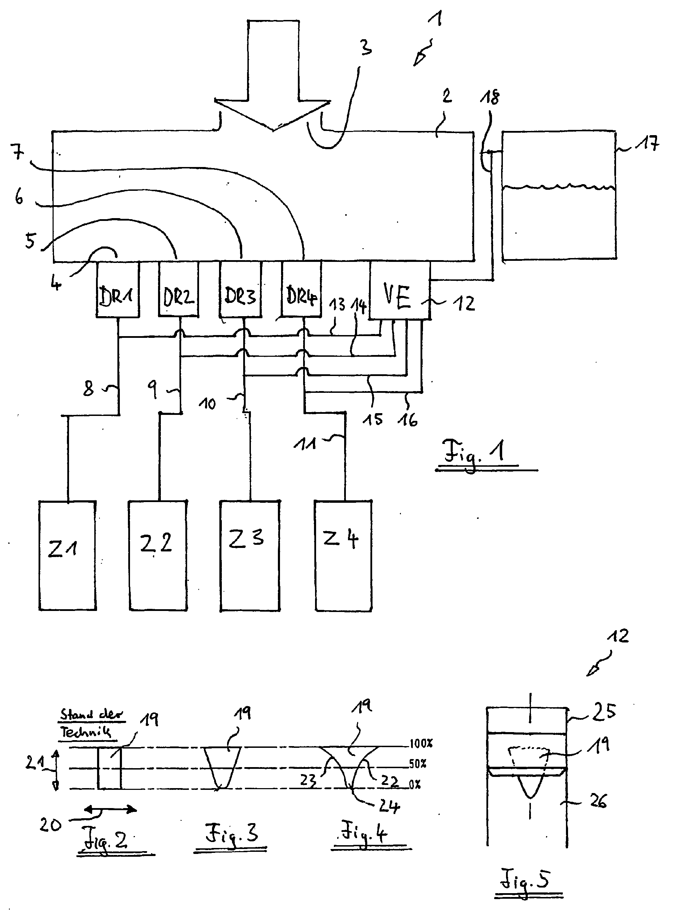

Figur 1 zeigt in schematisierter Darstellung die Ansaugeinrichtung 1 eines Verbrennungsmotors, der vier Zylinder Z1 - Z4 aufweist. Die Ansaugeinrichtung weist einen zentralen Ansaugkasten 2 auf, der auch als "Airbox" bezeichnet wird. Die Airbox 2 saugt Luft über eine oder mehrere Luftansaugöffnungen 3 an. Die Airbox 2 weist ferner Ausgangsöffnungen 4 - 7 auf. Die Ausgangsöffnungen 4 - 7 sind den Zylindern Z1 - Z4 zugeordnet. Jede der Ansaugöffnungen 4 -7 ist über eine Drosselklappe DR1 - DR4 und einen zugeordneten Luft- bzw. Gemischkanal 8 -11 mit dem zugeordneten Zylinder Z1 - Z4 verbunden. Im Normalbetrieb wird den Zylinder Z1 - Z4 Luft- bzw. Gemisch über die Ausgangsöffnungen 4 - 7 der Airbox 2 zugeführt.

Im Leerlaufbetrieb hingegen sind die Drosselklappen DR1 - DR4 ganz oder fast ganz geschlossen. Im Leerlaufbetrieb wird den Zylindern Z1 - Z4 Luft- bzw. Gemisch über ein Verteilerelement 12 zugeführt. Das Verteilerelement 12 weist ein Gehäuse mit einem Zylinder und einem darin verschieblich angeordneten Kolben (nicht dargestellt) auf. Der Zylinder des Verteilerelements 12 wird über einen Lufteingang des Verteilerelements 12 von der Airbox 2 mit Luft versorgt. In der Mantelfläche des Zylinders des Verteilerelements 12 sind mehrere Luftausgänge vorgesehen, die jeweils über einen Kanal bzw. über einen Schlauch 13 -16 mit einem der Gemischkanäle 8 - 11 verbunden sind. Die Schläuche 13 -16 sind an die Gemischkanäle 8 -11 im Bereich zwischen den Drosselklappen DR1 - DR4 und den Zylindern Z1 - Z4 angeschlossen. Im Leerlaufbetrieb werden die Zylinder Z1 - Z4 unter Umgehung der Drosselklappen DR1 - DR4 vom Verteilerelement 12 mit Luft- bzw. Gemisch versorgt. Durch die momentane Stellung des Kolbens des Verteilerelements 12 können die effektiven Durchflussquerschnitte der Luftausgangsöffnungen des Verteilerelements 12 bzw. der Schläuche 13 - 16 verändert werden.

Wesentlich für die Regelungsqualität im Leerlaufbetrieb ist die geometrische Form der Luftausgangsöffnungen des Verteilerelements, worauf im Zusammenhang mit den Figuren 2 - 5 noch näher eingegangen wird.

Vollständigkeitshalber wird noch auf einen Kraftstoffbehälter 17 hingewiesen. Der Kraftstoffbehälter 17 weist eine Entlüftungsleitung 18 auf, die an den Zylinder des Verteilerelements 12 angeschlossen ist. Der im Kraftstoffbehälter 17 verdunstende Kraftstoff wird über die Entlüftungsleitung 18 aufgefangen und dem Verteilerelement 12 zugeführt und von dort gleichmäßig auf die einzelnen Zylinder Z1 - Z4 verteilt.

Wie bereits erwähnt, sind in der Mantelfläche des Zylinders des Luftverteilungselements 12 Luftausgangsöffnungen vorgesehen, an die die Schläuche 13 -16 angeschlossen sind.

Figur 2 zeigt eine solche Luftausgangsöffnung 19 gemäß dem Stand der Technik. Die Luftausgangsöffnung 19 weist einen rechteckigen Querschnitt auf. Durch Verschieben des im Zylinder des Verteilerelements 12 angeordneten Stellkolbens kann zwar der effektive Durchflussquerschnitt der Luftausgangsöffnung 19 verändert werden. Da die in Umfangsrichtung 20 gemessene Breite der Luftausgangsöffnung 19 in Verstellrichtung 21 des Kolbens des Verteilerelements konstant ist, ist das Ansprechverhalten des Verteilerelements 12 über den gesamten Verstellweg des Kolbens konstant, was eine feinfühlige Regelung erschwert. Eine feinfühlige Regelung würde einen sehr genau arbeitenden Stellmotor erforderlich machen, was mit hohen Kosten verbunden ist.

Die Figuren 3 - 5 zeigen Ausführungsbeispiele gemäß der Erfindung. Bei den Ausführungsbeispielen der Figuren 3 - 5 sind die Luftausgangsöffnungen 19 dreieckförmig gestaltet. In Figur 3 ändert sich die Breite der Luftausgangsöffnung 19 in Verstellrichtung 21 des Kolbens des Verteilerelements über nahezu den gesamten Verstellweg linear mit der Kolbenstellung.

Beim Ausführungsbeispiel der Figur 4 weist die Luftausgangsöffnung 19 zwei konkave Seiten 22, 23 auf, die zungenartig zu einem abgerundeten Ende 24 der Luftausgangsöffnung 19 zusammenlaufen. Diese Form ermöglicht eine besonders genaue Regelung des Leerlaufluftvolumenstroms.

Figur 5 zeigt in schematischer Darstellung den Zylinder 25 des Verteilerelements 12. Bei einem Vierzylindermotor sind über den Umfang des Zylinders 25 des Verteilerelements 12 - entsprechend der Zylinderanzahl - vier Luftausgangsöffnungen 19 verteilt angeordnet. Im Zylinder 25 des Verteilerelements 12 ist der Kolben 26 verschieblich angeordnet. In Abhängigkeit von der Stellung des Kolbens 26 werden die Luftausgangsöffnung 19 mehr oder weniger durch die "Steuerkante" des Kolbens 26 abgesperrt.

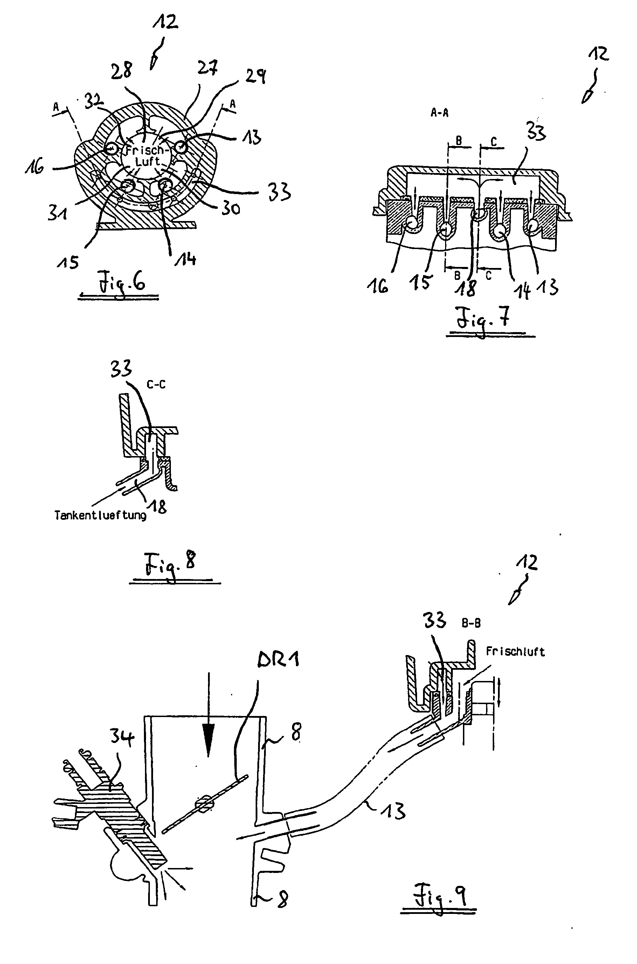

Figur 6 zeigt einen Schnitt durch das Gehäuse 27 eines Verteilerelements 12. Einem im Gehäuse 27 des Verteilerelements 12 vorgesehenen Zylinder 28, in dem ein senkrecht zur Zeichenebene verschieblicher Kolben (nicht dargestellt) angeordnet ist, wird Frischluft von der Airbox (Figur 1) zugeführt. In der Mantelfläche des Zylinders 28 sind V-förmige bzw. dreieckförmige Luftausgangsöffnungen 29 - 32 vorgesehen, die entsprechend den Luftausgangsöffnungen 19 der Figuren 3 - 5 gestaltet sein können. In Abhängigkeit von der Stellung des dem Zylinder 28 zugeordneten Kolbens sind die Luftausgangsöffnungen 29 - 32 ganz oder teilweise abgesperrt. Über die Luftausgangsöffnungen 29 - 32 strömt die angesaugte Frischluft in die Verbindungsschläuche 13 - 16, die mit den Luft- bzw. Gemischkanälen 8 - 11 (vgl. Figur 1) verbunden sind.

Figur 7 zeigt einen Schnitt durch das Gehäuse 27 der Figur 6 entlang der Schnittlinie A-A. Die Schnittlinie A-A verläuft durch eine Kammer 33 des Gehäuses 27 des Verteilerelements 12. Die Kammer 33 ist über die Entlüftungsleitung 18 (vgl. Figur 1) mit einem Kraftstoffbehälter verbunden. Im Kraftstoffbehälter verdunstender Kraftstoff wird über die Entlüftungsleitung 18 der Kammer 33 des Verteilerelements 12 zugeführt. In der Kammer 33 des Verteilerelements 12 wird der verdunstete Kraftstoff über die Schläuche 13 - 16 den Gemischkanälen 8 - 11 (vgl. Figur 1) der Zylinder Z1 - Z4 zugeführt.

Figur 8 zeigt einen Schnitt durch das Gehäuse 27 entlang der in Figur 7 dargestellten Schnittlinie C-C.

Figur 9 zeigt exemplarisch einen Schnitt durch den Gemischkanal 8, der dem Zylinder Z1 zugeordnet ist. Im Gemischkanal 8 ist die Drosselklappe DR1 angeordnet. Über eine Einspritzdüse 34 wird Kraftstoff in den Gemischkanal 8 eingespritzt. Der Gemischkanal 8 ist über den Schlauch 13 mit dem Verteilerelement 12 verbunden. Im Leerlaufbetrieb ist die Drosselklappe DR1 ganz oder fast ganz geschlossen, wobei dann dem Gemischkanal 8 Frischluft vom Verteilerelement 12 über den Schlauch 13 zugeführt wird. Kraftstoff, der im Kraftstoffbehälter verdampft, wird anteilig dem Gemischkanal 8 über die Kammer 33 des Verteilerelements 12 zugeführt.

## Patentansprüche

1. Ansaugeinrichtung (1) für einen Verbrennungsmotor, mit einem Ansaugkasten (2), der mindestens eine Luftansaugöffnung (3) und mehrere Ausgangsöffnungen (4 - 7) aufweist, die über jeweils einen zugeordneten Gemischkanal (8 -11), in dem jeweils eine Drosselklappe (DR1 - DR4) angeordnet ist, mit einem zugeordneten Zylinder (Z1 - Z4) des Verbrennungsmotors verbunden sind,
einem Verteilerelement (12), das zur Luftversorgung der Zylinder (Z1 - Z4) im Leerlaufbetrieb unter Umgehung der Drosselklappen (DR1 - DR4) vorgesehen ist, wobei das Verteilerelement (12) folgendes aufweist:
• Ein verschiebliches Element (26), das in einem Gehäuse (28) in Längsrichtung des Zylinders (28) verschieblich angeordnet ist,
• einen Lufteingang, über den das Gehäuse (28) des Verteilerelements (12) mit dem Ansaugkasten (2) in Strömungsverbindung steht,
• mehrere in dem Gehäuse vorgesehene Luftausgänge (19; 29 - 32), deren momentane Durchflussquerschnitte durch die momentane Stellung des verschieblichen Elements (26) festgelegt sind und die jeweils über eine Leitung (13 - 16) mit einem der Gemischkanäle (8, 11) im Bereich zwischen der jeweiligen Drosselklappe (DR1 - DR4) und dem jeweiligen Zylinder (Z1 - Z4) verbunden sind,
**dadurch gekennzeichnet, dass**
das verschiebliche Element (26) ein Kolben und das Gehäuse (28) ein Zylinder ist,
dass die Luftausgänge (19; 29 - 32) in der Mantelfläche des Zylinders (28) vorgesehen sind, und dass
sich die in einer Umfangsrichtung (20) des Zylinders (28) gemessene Breite eines jeden der Luftausgänge (19; 29 - 32) in Längsrichtung (21) des Zylinders (28) des Verteilerelements (12) ändert und dass wobei ein Kraftstofftank (17) vorgesehen ist, der über eine Entlüftungsleitung (18) mit dem Zylinder (28) des Verteilerelements (12) verbunden ist.

2. Ansaugeinrichtung (1) nach Anspruch 1, wobei die in der Umfangsrichtung (20) des Zylinders (28) gemessene Breite eines jeden der Luftausgänge (19, 29 - 32) von einer Kolbenstellung aus betrachtet, in welcher die Luftausgänge (19; 29 - 32) ganz geöffnet sind, zu einer Kolbenstellung, in der die Luftausgänge (19; 29 - 32) ganz durch den Kolben (26) verschlossen sind, zunimmt.

3. Ansaugeinrichtung (1) nach einem der Ansprüche 1 oder 2, wobei die Luftausgänge (19; 29 - 32) dreieckförmig sind.

4. Ansaugeinrichtung (1) nach einem der Ansprüche 1 bis 3, wobei die Luftausgänge (19; 29 - 32) einen Querschnitt mit zwei konkaven Seiten (22, 23) haben.

5. Ansaugeinrichtung (1) nach Anspruch 4, wobei die beiden konkaven Seiten (22, 23) zungenartig zusammenlaufen, wobei, wenn eine Kante des Kolbens (26) an dem durch die beiden zungenartig zusammenlaufenden konkaven Seiten (22, 23) gebildeten Endbereich ansteht, die Luftausgänge (19; 29 - 32) ganz geöffnet sind.

## Claims

1. An inlet device (1) for an internal combustion engine, with an inlet plenum (2), which has at least one air inlet opening (3) and a plurality of outlet openings (4 - 7), which are connected by means of an associated mixing duct (8 - 11), in which a respective throttle valve (DR1 - DR4) is arranged, to an associated cylinder (Z1 - Z4) of the internal combustion engine, with a distributor element (12), which is provided for the air supply of the cylinders (Z1 - Z4) during idling by bypassing the throttle valves (DR1 - DR4), the distributor element (12) having the following:
• a displaceable element (26), which is displaceably arranged in a housing (28) in the longitudinal direction of the cylinder (28),
• an air inlet, by means of which the housing (28) of the distributor element (12) has a flow connection to the inlet plenum (2),
• a plurality of air outlets (19; 29 - 32) provided in the housing, the through-flow cross sections of which are fixed by the instantaneous position of the displaceable element (26) and which are in each case connected by a line (13 - 16) to one of the mixing ducts (8, 11) in the region between the respective throttle valve (DR1 - DR4) and the respective cylinder (Z1 - Z4),
**characterised in that** the displaceable element (26) is a piston and the housing (28) is a cylinder, **in that** the air inlets (19; 29 - 32) are provided in the lateral surface of the cylinder (28), and **in that** the width of each of the air outlets (19; 29 - 32) in the longitudinal direction (21) of the cylinder (28) of the distributor element (12), which is measured in a peripheral direction (20) of the cylinder (28), changes, and **in that** a fuel tank (17) is provided, which is connected by a venting line (18) to the cylinder (28) of the distributor element (12).

2. An inlet device (1) according to claim 1, wherein the width of each of the air outlets (19, 29 - 32) measured in the peripheral direction (20) of the cylinder (28), viewed from a piston position, in which the air outlets (19; 29 - 32) are completely open, increases with respect to a piston position, in which the air outlets (19; 29 - 32) are completely closed by the piston (26).

3. An inlet device (1) according to either of claims 1 or 2, wherein the air outlets (19; 29 - 32) are triangular.

4. An inlet device (1) according to any one of claims 1 to 3, wherein the air outlets (19; 29 - 32) have a cross section with two concave sides (22, 23).

5. An inlet device (1) according to claim 4, wherein the two concave sides (22, 23) run together in the manner of a tongue, wherein, if one edge of the piston (26) is at an end region formed by the two concave sides (22, 23) running together in the manner of a tongue, the air outlets (19; 29 - 32) are completely open.

## Revendications

1. Installation d'admission d'un moteur à combustion interne comprenant :
- un caisson d'admission (2) ayant au moins un orifice d'aspiration d'air (3) et plusieurs orifices de sortie (4-7) reliés respectivement par un canal de mélange associé (8-11) équipé d'un volet d'étranglement (DR1-DR4) à un cylindre (Z1-Z4) du moteur à combustion interne,
- un élément distributeur (12) pour assurer l'alimentation en air des cylindres (Z1-Z4) au ralenti, en contournant les volets d'étranglement (DR1-DR4), l'élément de distribution (12) comportant :
* un élément (26) coulissant longitudinalement dans la direction longitudinale d'un boîtier (28) cylindrique,
* une entrée d'air reliée par le boîtier (28) de l'élément de distribution (12) au boîtier d'admission (2) par une liaison fluidique,
* plusieurs sorties d'air (19; 29-32) prévues dans le boîtier et dont la section de passage instantanée est fixée par la position instantanée de l'élément coulissant (26) et qui sont respectivement reliées par une conduite (13-16) à l'un des canaux de mélange (8, 11) dans la zone comprise entre le volet d'étranglement (DR1-DR4) respectif, et le cylindre (Z1-Z4) respectif,
installation **caractérisée en ce que**
l'élément coulissant (26) est un piston et le boîtier (28) est un cylindre,
- les sorties d'air (19; 29-32) sont prévues dans la surface-enveloppe du cylindre (28), et
- la largeur de chacune des sorties d'air (19; 29-32) mesurée dans la direction périphérique (20) du cylindre (28), varie dans la direction longitudinale (21) du cylindre (28) de l'élément de distribution (12), et
- un réservoir de carburant (17) est relié par une conduite de ventilation (18) au cylindre (28) de l'élément de distribution (12).

2. Installation d'admission (1) selon la revendication 1,
**caractérisée en ce que**
la largeur mesurée dans la direction périphérique (20) du cylindre (28) de chacune des sorties d'air (19; 29-32) vue à partir d'une position de piston, dans laquelle les sorties d'air (19; 29-32) sont complètement ouvertes, vers une position de piston dans laquelle les sorties d'air (19; 29-32) sont complètement fermées par le piston (26), est une largeur qui augmente.

3. Installation d'admission (1) selon la revendication 1 ou 2,
**caractérisée en ce que**
les sorties d'air (19; 29-32) sont de forme triangulaire.

4. Installation d'admission (1) selon l'une des revendications 1 à 3,
**caractérisée en ce que**
les sorties d'air (19; 29-32) ont une section avec deux côtés concaves (22, 23).

5. Installation d'admission (1) selon la revendication 4,
**caractérisée en ce que**
les deux côtés concaves (22, 23) se rejoignent en forme de languettes, les sorties d'air (19; 29-32) étant complètement ouvertes lorsque l'arête du piston (26) arrive sur la zone d'extrémité formée par les côtés concaves (22, 23) en forme de languettes qui se rejoignent.
